# EUROPEAN PATENT APPLICATION

(11) **EP 2 311 354 A1**
(43) Date of publication of application: **20.04.2011**
(21) Application number: 09799933.8
(22) Date of filing: 23.07.2009
(51) Int. Cl.: A47J 37/06, A47J 37/08, A21B 1/00

(54) **MULTIFUNCTIONAL BREAD TOASTER**

(30) Priority: 23.07.2008 CN 200820051200 U; 23.07.2008 CN 200820051201 U; 25.07.2008 CN 200820051300 U
(71) Applicant: Kang, Baolian, Guangdong 519030 (CN)
(72) Inventor: WANG, Donglei, Zhuhai Guangdong 519030 (CN); LI, Tinghong, Zhuhai Guangdong 519030 (CN)
(74) Representative: Notaro, Giancarlo
(86) International application number: PCT/CN2009/000821
(87) International publication number: WO 2010/009617

(57) **Abstract**

The present invention provides a multifunctional bread maker which can toast bread in a bread bucket as well as meet the need of toasting bread with different shapes and even toasting other food. The multifunctional bread maker comprises an outer shell, a case set inside the outer shell and an upper cover set at a top of the outer shell. The upper cover, the case and the outer shell surround an enclosed working cavity. The bread maker further comprises a bread bucket which has an upward opening and is easily loaded and unloaded, and one or more heating modules which are set inside the case but outside the bread bucket. The bread maker further comprises one or more toasting pans easily loaded and unloaded, with toasting pan support assemblies set on inner walls of the case. When it is needed to make bread with a bread bucket, the bread bucket is loaded in the enclosed working cavity, and when it is needed to bake food with toasting pans, the one or more toasting pans are placed on the toasting pan support assemblies. The heating module is a ring member surrounding the bread bucket or the toasting pan.

## Description

### TECHNICAL FIELD

The present invention relates to a bread maker, and more particularly, to a bread maker with blending function and heating modules, which can not only make bread but also toast food.

### BACKGROUND OF THE INVENTION

The bread maker in the prior art comprises an outer shell, a case set inside an outer shell, an upper cover set at a top of the outer shell. The upper cover, the case and the outer shell surround an enclosed working cavity. A bread bucket is set in the enclosed working cavity. A blender goes through walls of the bread bucket with blending blades located in the bread bucket for blending flour. Heating modules are set outside the bread bucket but inside the working cavity. The blender is set inside the outer shell via a base assembly set under the case. A motor is set outside the working cavity and drives the blender via the gearing.

The conventional bread maker is generally an integral machine. A blender and a case are set in the machine. A bread bucket is set in the case, dough blended is put in the bread bucket. A heating tube is set at a bottom of the case for toasting bread. Since the heating tube is set at the bottom of the case, upper part and lower part of the dough in the bread bucket will be heated unevenly while the heat is being transferred from bottom to top. The lower part of the dough will be over-heated, whereas the upper part won't be heated enough. The bread toasted in such condition will be unevenly in color. Moreover, the common bread maker in the markets is equipped with only the bread bucket, so the dough blended in the bread bucket can be toasted only in the bread bucket and the bread toasted is monotonous in shape. So the bread maker of the prior art is monotonous in function and has little flexibility.

In order to solve the problems of the bread makers of the prior art, improvements have been made in the present invention.

### SUMMARY OF THE INVENTION

The present invention is aimed at providing a multifunctional bread maker, which can toast bread in a bread bucket as well as meet the need of toasting bread with different shapes and even toasting other food.

The object of the present invention is achieved by the following technical scheme:
A multifunctional bread maker, comprising an outer shell, a case set inside the outer shell, and an upper cover set at a top of the outer shell; the upper cover, the case and the outer shell surround an enclosed working cavity; the bread maker further comprises a bread bucket which has an upward opening and is easily loaded and unloaded, and one or more heating modules which are set inside the case but outside the bread bucket; wherein, the bread maker further comprises one or more toasting pans easily loaded and unloaded, with toasting pan support assemblies set on inner walls of the case; when it is needed to make bread with a bread bucket, the bread bucket is loaded in the enclosed working cavity; and when it is needed to bake food with toasting pans, the one or more toasting pans are placed on the toasting pan support assemblies.

The heating module is a ring member surrounding the bread bucket or the toasting pan.

In summary, the present invention has following advantages:
The multifunctional bread maker of the present invention is equipped with a bread bucket as well as toasting pans. The bread bucket can be loaded in the bread maker to toast bread, and the toasting pans can be loaded in the bread maker to bake different food. The toasting pans are placed in the case by means of the toasting pan support assemblies set on the inner walls of the case. The toasting pan support assemblies in the case can be fixed on the inner walls of the case, above the electrical heating tubes or at the bottom of the case. The toasting pans can be removed with a tool after the food has been toasted. The toasting pan can be in the shape of cuboid or other shapes. Thus the bread maker can meet the need of making bread with different shapes and has much more flexibility and more functions. Meanwhile, the heating modules are set in the bread maker, so as to overcome the disadvantages of the bread makers of the prior art, and provide a bread maker which can heat the bread evenly, make the bread in better color, and make bar-shaped bread.

### BRIEF DESCRIPTION OF THE DRAWINGS

Fig. 1 is an exploded view illustrating the multifunctional bread maker according to the first embodiment of the present invention when it is loaded with toasting pans;
Fig. 2 is a sectional view illustrating the multifunctional bread maker according to the first embodiment of the present invention when it is loaded with the toasting pans;
Fig. 3 is an exploded view illustrating the multifunctional bread maker according to the first embodiment of the present invention when it is loaded with a bread bucket;
Fig. 4 is a sectional view illustrating the multifunctional bread maker according to the first embodiment of the present invention when it is loaded with the bread bucket;
Fig. 5 is an exploded view illustrating the multifunctional bread maker according to the second embodiment of the present invention when it is loaded with toasting pans;
Fig. 6 is a sectional view illustrating the multifunctional bread maker according to the second embodiment of the present invention when it is loaded with the toasting pans;
Fig. 7 is a schematic view illustrating different working positions of the toasting pan support assembly in the multifunctional bread maker of the present invention;
Fig. 8 is an exploded view illustrating the multifunctional bread maker according to the third embodiment of the present invention when it is loaded with toasting pans;
Fig. 9 is a sectional view illustrating the multifunctional bread maker according to the third embodiment of the present invention when it is loaded with the toasting pans;
Fig. 10 is an exploded view illustrating the multifunctional bread maker according to the third embodiment of the present invention when it is loaded with a bread bucket;
Fig. 11 is a sectional view illustrating the multifunctional bread maker according to the third embodiment of the present invention when it is loaded with the bread bucket;
Fig. 12 is an exploded view illustrating the multifunctional bread maker according to the fourth embodiment of the present invention when it is loaded with toasting pans;
Fig. 13 is a sectional view illustrating the multifunctional bread maker according to the fourth embodiment of the present invention when it is loaded with the toasting pans;
Fig. 14 is an exploded view illustrating the multifunctional bread maker according to the fifth embodiment of the present invention when it is loaded with toasting pans;
Fig. 15 is a sectional view illustrating the multifunctional bread maker according to the fifth embodiment of the present invention when it is loaded with the toasting pans;
Fig. 16 is an exploded view illustrating the multifunctional bread maker according to the sixth embodiment of the present invention when it is loaded with toasting pans;
Fig. 17 is a sectional view illustrating the multifunctional bread maker according to the sixth embodiment of the present invention when it is loaded with the toasting pans;
in which, the elements are denoted as follows:
   1. upper toasting pan
   2. lower toasting pan
   3. case
   4. upper toasting pan support assembly
   5. lower toasting pan support assembly
   6. upper electrical heating tube
   7. lower electrical heating tube
   8. bread bucket
   9. driving device
   10. blending bar
   41. rotation axis
   42. base
   43. arm
   40. upper toasting pan support assembly
   50. lower toasting pan support assembly
   16. electrical heating tube
   26. hot air circulator
   261. heating box
   262. hot air fan
   263. hot air box
   264. motor
   265. cooling fan
   266. air outlet

### DETAILED DESCRIPTION OF THE PREFERRED EMBODIMENTS

The present invention will be described in more details with reference to the accompanying drawings.

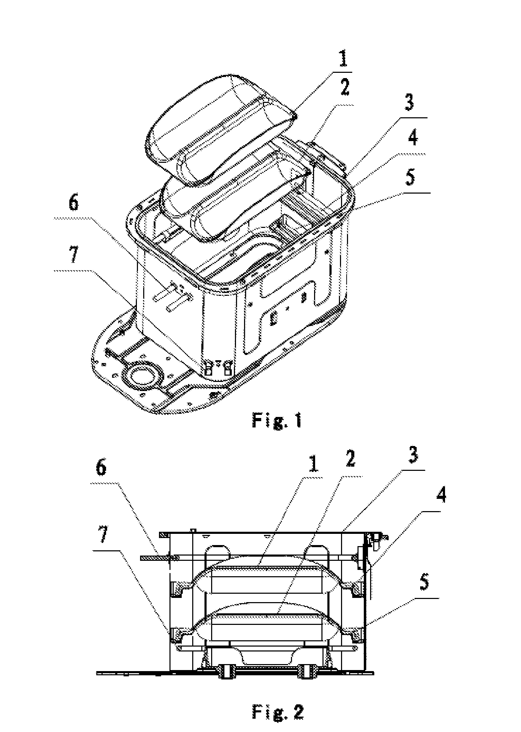

As shown in Figs.1, 2, 3 and 4, a multifunctional bread maker comprises an outer shell, a case 3 set inside the outer shell and an upper cover set at a top of the outer shell. The upper cover, the case 3 and the outer shell surround an enclosed working cavity. The bread maker further comprises a bread bucket which has an upward opening and is easily loaded and unloaded, and one or more heating modules which are set inside the case but outside the bread bucket. The bread maker further comprises one or more toasting pans easily loaded and unloaded, with toasting pan support assemblies set on inner walls of the case. When it is needed to make bread with a bread bucket, the bread bucket is loaded in the enclosed working cavity, and when it is needed to bake food with toasting pans, the one or more toasting pans are placed on the toasting pan support assemblies.

The heating module is a ring member surrounding the bread bucket or the toasting pan.

### The First Embodiment

As shown in Figs.1, 2, 3, 4 and 7, the multifunctional bread maker disclosed in the first embodiment comprises two toasting pans easily loaded and unloaded, namely the upper toasting pan 1 and the lower toasting pan 2. Two toasting pan support assemblies are set on inner walls of the case 3, namely the upper toasting pan support assembly 4 and the lower toasting pan support assembly 5. The upper toasting pan support assembly 4 is set on an upper middle level of the inner wall of the case 3. The lower toasting pan support assembly 5 is set on a lower middle level of the inner wall of the case 3.

The multifunctional bread maker comprises two heating modules which are set separately at upper level and lower level in the case, namely the upper electrical heating tube 6 which is set horizontally at the upper level in the case and the lower electrical heating tube 7 which is set horizontally at the lower level in the case. The upper electrical heating tube 6 is set above the upper toasting pan support assembly 4, the lower electrical heating tube 7 is set below the lower toasting pan support assembly 5.

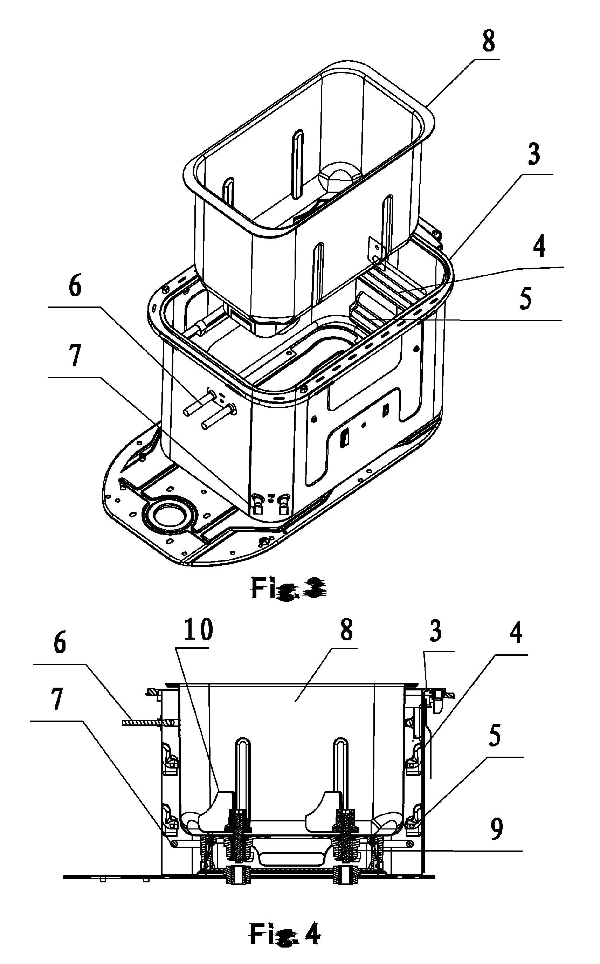

As shown in Fig. 4, a driving device 9 for blending flour automatically is set at a bottom of the case 3 of the bread maker, a blending bar 10 is set in the bread bucket 8. The driving device 9 is connected to the blending bar 10 via the gearing. The blending bar 10 rotates to blend flour in the bread bucket 8. The upper electrical heating tube 6 is set in a middle level around the bread bucket 8, and the lower electrical heating tube 7 is set at the bottom of the bread bucket 8.

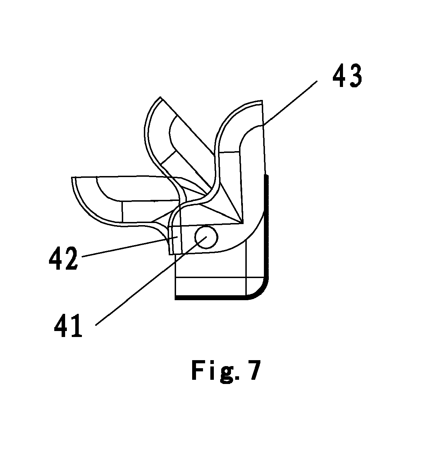

As shown in Fig.7, the upper toasting pan support assembly 4 and the lower toasting pan support assembly 5 may be configured in the identical structure. The toasting pan support assembly comprises a base 42, an arm 43, a reset elastic device and a rotation axis 41. The rotation axis 41 is fixed on the inner wall of the case 3. The arm 43 of the toasting pan support assembly has a first working position and a second working position. When it is needed to bake food with toasting pans, the toasting pan support assembly is set to rotate the arm 43 to the first working position where the arm 43 stretches horizontally and is positioned at the inner side of the rotation axis 41; When it is needed to make bread with a bread bucket, the arm 43 is reset to the second working position where the arm 43 stretches upwards vertically against the inner wall of the case 3.

The upper toasting pan 1 or the lower toasting pan 2 is a flat plate.

The upper toasting pan 1 or the lower toasting pan 2 is a disk-shaped container with two or more concave cavities.

As shown in Figs.1, 2, 3, 4 and 7, in this embodiment, the case 3 has the shape of a cuboid, the upper toasting pan support assembly 4 and the lower toasting pan support assembly 5 are mounted on the short-edge sides of the case 3. The upper toasting pan 1 and the lower toasting pan 2 are placed at their two ends on the tops of the arms of the upper toasting pan support assembly 4 and the lower toasting pan support assembly 5 respectively.

The multifunctional bread maker of the first embodiment can be operated in the following steps:
Firstly, load the bread bucket 8 in the case 3 and put flour in the bread bucket 8. Blend the flour into dough with the blending bar 10 driven by the driving device 9 via the gearing. Then the dough can be remained in the bread bucket 8 and toasted by the two heating modules till the bread is successfully toasted. Optionally, take out the bread bucket 8 and load one or two of the upper toasting pan 1 and the lower toasting pan 2 in the case 3, put the dough in the toasting pan, then place the toasting pan on the support assemblies till the bread in the shape of the corresponding toasting pan is successfully baked.

### The Second Embodiment

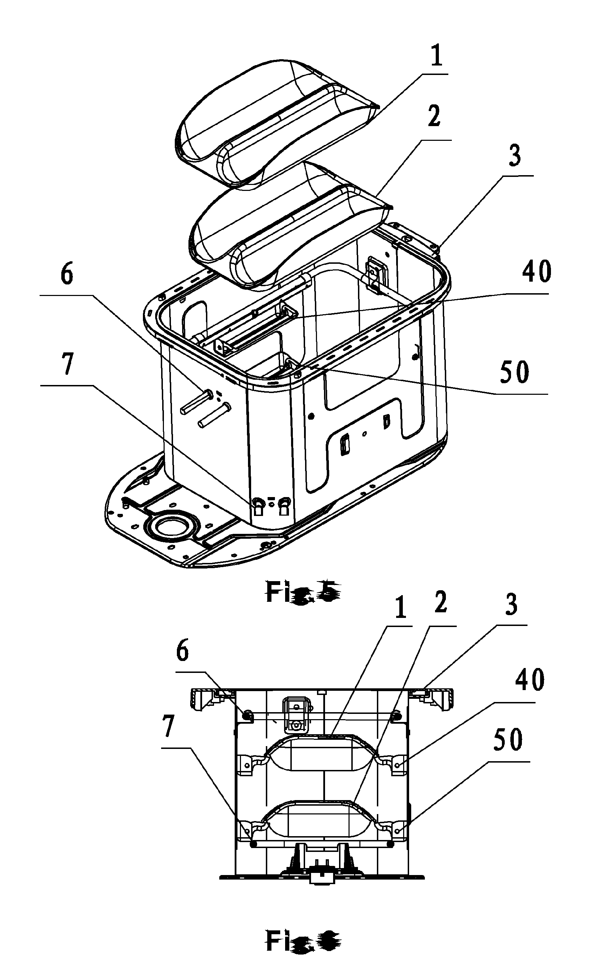

As shown in Figs. 5 and 6, the second embodiment differs from the first embodiment in that, while the case 3 has the shape of a cuboid, the upper toasting pan support assembly 4 and the lower toasting pan support assembly 5 are mounted on the long-edge sides of the case 3. The upper toasting pan 1 and the lower toasting pan 2 are placed at their two ends on the tops of the arms of the upper toasting pan support assembly 4 and the lower toasting pan support assembly 5 respectively.

### The Third Embodiment

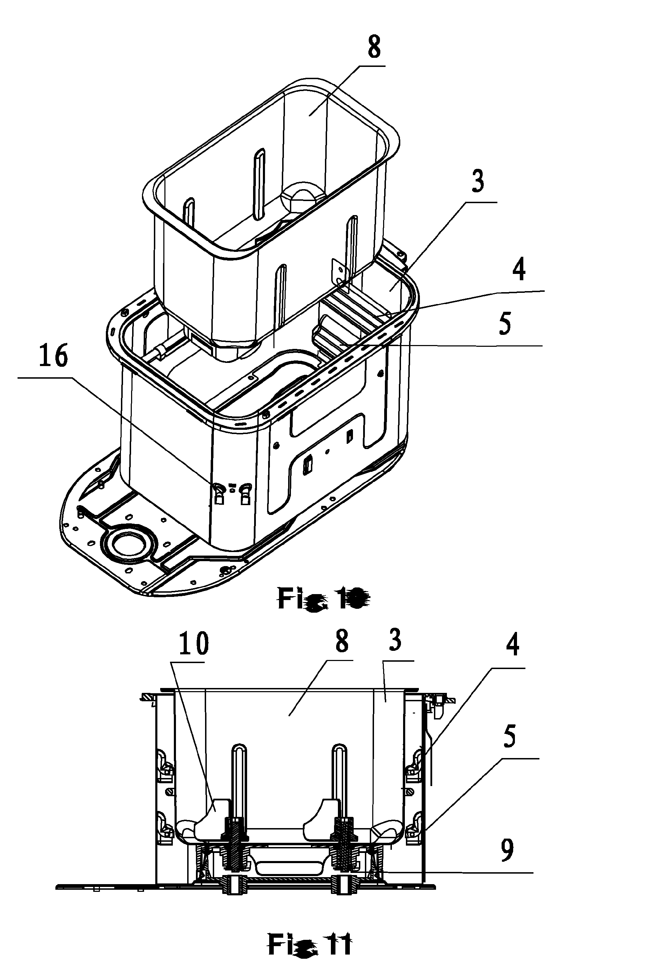

As shown in Figs. 7, 8, 9, 10 and 11, the multifunctional bread maker disclosed in the third embodiment differs from the first embodiment in that, one heating module is set horizontally in an intermediate level in the case, and the heating module is a ring-shaped electrical heating tube 16 surrounding the bread bucket or the toasting pan.

The electrical heating tube 16 is set between the upper toasting pan support assembly 4 and the lower toasting pan support assembly 5.

As shown in Fig. 4, the driving device 9 for blending flour automatically is set at the bottom of the case 3 of the bread maker, the blending bar 10 is set in the bread bucket 8. The driving device 9 is connected to the blending bar 10 via the gearing, and the blending bar 10 rotates to blend the flour in the bread bucket 8. The electrical heating tube 16 is set at a lower middle level around the bread bucket 8.

The upper toasting pan 1 or the lower toasting pan 2 is a flat plate.

The upper toasting pan 1 or the lower toasting pan 2 is a disk-shaped container with two or more concave cavities.

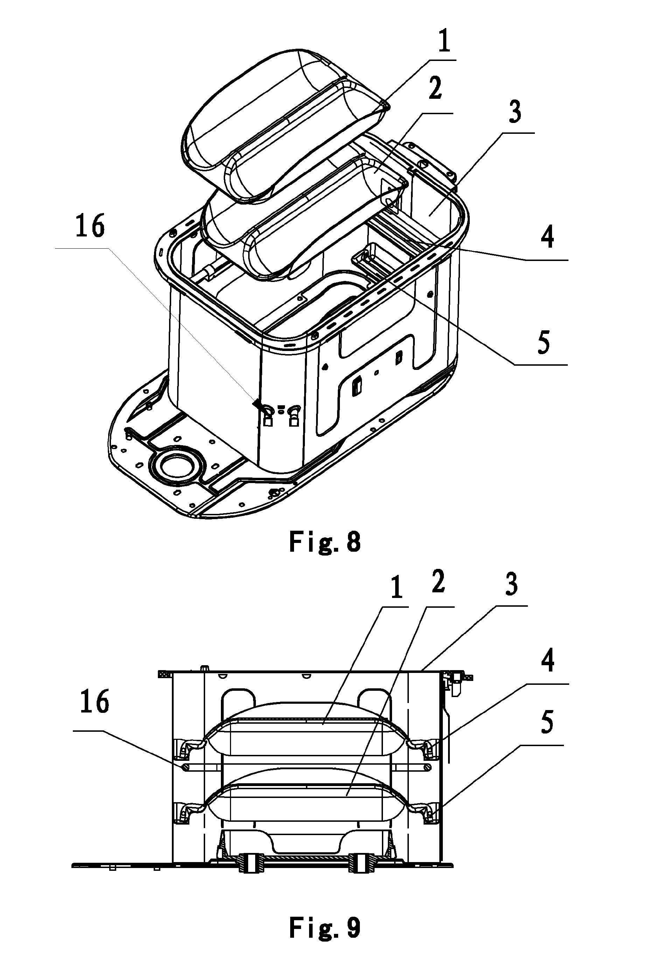

As shown in Figs. 8, 9, 10 and 11, in this embodiment, the case 3 has the shape of a cuboid, the upper toasting pan support assembly 4 and the lower toasting pan support assembly 5 are mounted on the short-edge sides of the case 3. The upper toasting pan 1 and the lower toasting pan 2 are placed at their two ends on the tops of the arms of the upper toasting pan support assembly 4 and the lower toasting pan support assembly 5 respectively.

The multifunctional bread maker of the third embodiment can be operated in the following steps:
Firstly, load the bread bucket 8 in the case 3 and put flour in the bread bucket 8. Blend the flour into dough with the blending bar 10 driven by the driving device 9 via the gearing. Then the dough can be remained in the bread bucket 8 and toasted by the heating module till the bread is successfully toasted. Optionally, take out the bread bucket 8 and load one or two of the upper toasting pan 1 and the lower toasting pan 2 in the case 3, put the dough in the toasting pan, then place the toasting pan on the support assemblies till the bread in the shape of the corresponding toasting pan is successfully baked.

### The Fourth Embodiment

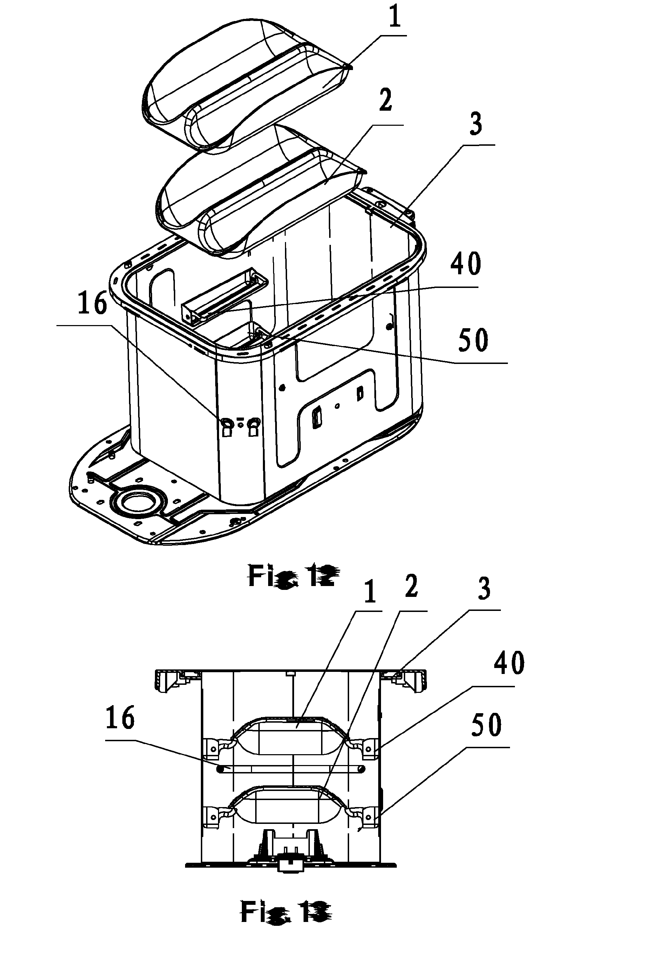

As shown in Figs. 12 and 13, the fourth embodiment differs from the first embodiment in that, while the case 3 has the shape of a cuboid, the upper toasting pan support assembly 4 and the lower toasting pan support assembly 5 are mounted on the long-edge sides of the case 3. The upper toasting pan 1 and the lower toasting pan 2 are placed at their two ends on the tops of the arms of the upper toasting pan support assembly 4 and the lower toasting pan support assembly 5 respectively.

### The Fifth Embodiment

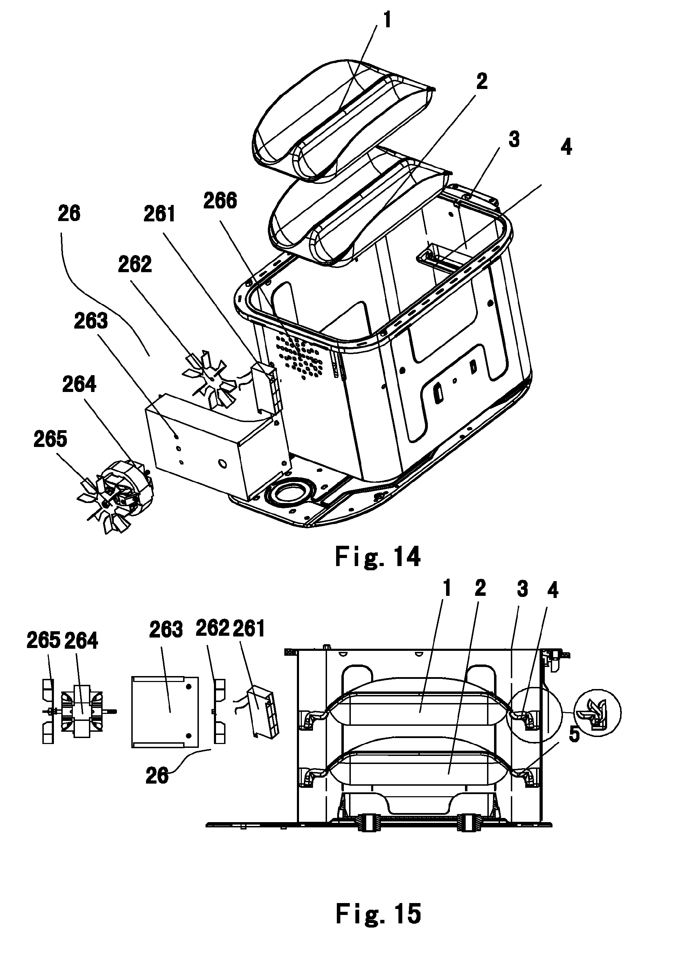

As shown in Figs.14 and 15, the multifunctional bread maker with hot air circulating disclosed in this embodiment comprises an outer shell, a case 3 set inside the outer shell and an upper cover set at the top of the outer shell. The upper cover, the case 3 and the outer shell surround the enclosed working cavity. The bread maker further comprises a bread bucket which has an upward opening and is easily loaded and unloaded, and one or more heating modules which are set inside the case but outside the bread bucket. The bread maker further comprises one or more toasting pans easily loaded and unloaded, with toasting pan support assemblies set on inner walls of the case. When it is needed to make bread with a bread bucket, the bread bucket is loaded in the enclosed working cavity, and when it is needed to bake food with toasting pans, the one or more toasting pans are placed on the toasting pan support assemblies. The heating module comprises a hot air circulator 26 set outside the enclosed working cavity, with air outlets 266 of the hot air circulator communicated to the enclosed working cavity; the hot air circulator 26 further comprises a blowing unit and a heating unit.

The hot air circulator 26 is set between the outer shell and the case.

The hot air circulator 26 comprises a heating box 261, a hot air fan 262, a hot air box 263, a motor 264 and a cooling fan 265 orderly set in the direction of outflow air. The hot air box 263 shields the hot air fan 262 from the motor 264, so that a region for hot air flow is formed in the hot air box 263.

The multifunctional bread maker disclosed in this embodiment comprises two toasting pans easily loaded and unloaded, namely the upper toasting pan 1 and the lower toasting pan 2. Two toasting pan support assemblies are set on inner walls of the case 3, namely the upper toasting pan support assembly 4 and the lower toasting pan support assembly 5. The upper toasting pan support assembly 4 is set on an upper middle level of the inner wall of the case 3. The lower toasting pan support assembly 5 is set on a lower middle level of the inner wall of the case 3.

As shown in Fig. 7, the upper toasting pan support assembly 4 and the lower toasting pan support assembly 5 may be configured in the identical structure. The toasting pan support assembly comprises a base 42, an arm 43, a reset elastic device and a rotation axis 41. The rotation axis 41 is fixed on the inner wall of the case 3. The arm 43 of the toasting pan support assembly has a first working position and a second working position. When it is needed to bake food with toasting pans, the toasting pan support assembly is set to rotate the arm 43 to the first working position where the arm 43 stretches horizontally and is positioned at the inner side of the rotation axis 41; When it is needed to make bread with a bread bucket, the arm 43 is reset to the second working position where the arm 43 stretches upwards vertically against the inner wall of the case 3.

The case 3 of the fifth embodiment has the shape of a cuboid. The upper toasting pan support assembly 4 and the lower toasting pan support assembly 5 are set on the two opposite short-edge sides or the two opposite long-edge sides of the case 3. The upper toasting pan 1 and the lower toasting pan 2 are placed at their two ends on the tops of the arms of the upper toasting pan support assembly 4 and the lower toasting pan support assembly 5 respectively.

The case 3 may be in another shape such as an ellipsoid or other irregular shapes, with the toasting pan support assemblies set on the two opposite inner sides of the case 3.

Heating wires are set in the heating box 261. The hot air fan 262 and the cooling fan 265 are axial fans. The hot air box 263 is a completely closed box. The hot air fan 262 for the heating box 261 is located in the region enclosed by the heating box 261. Rotation axes of the hot air fan 262, the motor 264 and the cooling fan 265 lie on a same line.

The driving device for blending flour automatically is set at the bottom of the case 3 of the bread maker, and the blending bar is set in the bread bucket. The driving device is connected to the blending bar via the gearing, and the blending bar rotates to blend the flour in the bread bucket.

The multifunctional bread maker of the fifth embodiment can be operated in the following steps:

Firstly, load the bread bucket in the case 3 and put flour in the bread bucket. Blend the flour into dough with the blending bar 10 driven by the driving device 9 via the gearing. Then the dough can be remained in the bread bucket and toasted by hot air from the hot air circulator 26 till the bread is successfully toasted. Optionally, take out the bread bucket and load one or two of the upper toasting pan 1 and the lower toasting pan 2 in the case 3, put the dough in the toasting pan, then place the toasting pan on the support assemblies till the bread in the shape of the corresponding toasting pan is successfully baked.

### The Sixth Embodiment

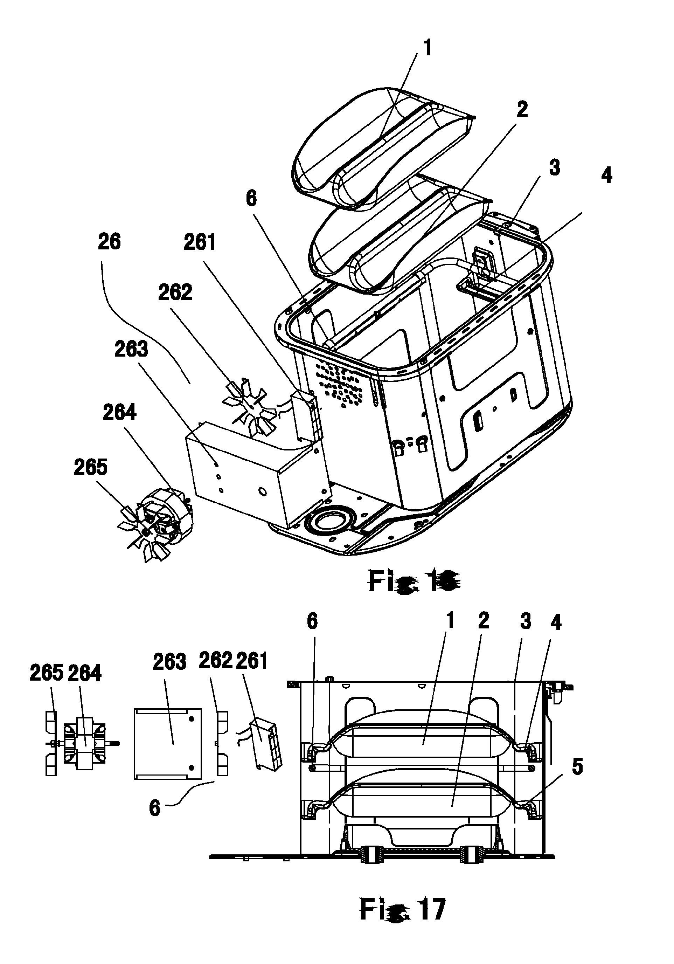

As shown in Figs. 16 and 17, the sixth embodiment differs from the first embodiment in that, the heating modules further comprise one or two electrical heating tubes set in the case.

The electrical heating tube is a ring member surrounding the bread bucket or the toasting pan.

The electrical heating tube is set between the upper toasting pan support assembly 1 and the lower toasting pan support assembly 2.

The driving device for blending flour automatically is set at the bottom of the case 3 of the bread maker, and a blending bar is set in the bread bucket. The driving device is connected to the blending bar 10 via the gearing, and the blending bar rotates to blend the flour in the bread bucket. The electrical heating tube is set at a lower middle level around the bread bucket.

The preferred embodiments described above are not restricted. It will be understood by those skilled in the art that various modifications and changes, such as the changes in the shape of the toasting pan, the shape of the case, the configuration of the electrical heating tube, the hot air circulating device and so on, may be made therein without departing from the scope of the invention.

## Claims

1. A multifunctional bread maker, comprising an outer shell, a case (3) set inside the outer shell, and an upper cover set at a top of the outer shell; the upper cover, the case (3) and the outer shell surround an enclosed working cavity;
the bread maker further comprises a bread bucket which has an upward opening and is easily loaded and unloaded, and one or more heating modules which are set inside the case but outside the bread bucket; wherein,
the bread maker further comprises one or more toasting pans easily loaded and unloaded, with toasting pan support assemblies set on inner walls of the case;
when it is needed to make bread with a bread bucket, the bread bucket is loaded in the enclosed working cavity; and
when it is needed to bake food with toasting pans, the one or more toasting pans are placed on the toasting pan support assemblies.

2. The multifunctional bread maker according to claim 1, wherein the heating module is a ring member surrounding the bread bucket or the toasting pan.

3. The multifunctional bread maker according to claim 1, wherein, there are two toasting pans easily loaded and unloaded, namely the upper toasting pan (1) and the lower toasting pan (2); there are two toasting pan support assemblies set on inner walls of the case (3), namely the upper toasting pan support assembly (4) and the lower toasting pan support assembly (5); the upper toasting pan support assembly (4) is set on an upper middle level of the inner walls of the case (3); and the lower toasting pan support assembly (5) is set on a lower middle level of the inner walls of the case (3).

4. The multifunctional bread maker according to claim 3, wherein the toasting pan support assembly comprises a base (42), an arm (43), a reset elastic device and a rotation axis (41);
the rotation axis (41) is fixed on the inner walls of the case (3);
the arm (43) of the toasting pan support assembly has a first working position and a second working position;
when it is needed to bake food with toasting pans, the toasting pan support assembly is set to rotate the arm (43) to the first working position where the arm (43) stretches horizontally and is positioned at the inner side of the rotation axis (41); and
when it is needed to make bread with a bread bucket, the arm (43) is reset to the second working position where the arm (43) stretches upwards vertically against the inner wall of the case (3).

5. The multifunctional bread maker according to claim 3 or 4, wherein the upper toasting pan (1) or the lower toasting pan (2) is a flat plate.

6. The multifunctional bread maker according to claim 3 or 4, wherein the upper toasting pan (1) or the lower toasting pan (2) is a disk-shaped container with two or more concave cavities.

7. The multifunctional bread maker according to claim 3 or 4, wherein, the case (3) has a shape of a cuboid; the upper toasting pan support assembly (4) and the lower toasting pan support assembly (5) are mounted on long-edge sides or short edge sides of the inner walls of the case (3) ; and the upper toasting pan (1) and the lower toasting pan (2) are placed at their two ends on tops of the arms of the upper toasting pan support assembly (4) and the lower toasting pan support assembly (5) respectively.

8. The multifunctional bread maker according to claim 2, 3 or 4, wherein, there are two heating modules which are set separately at upper level and lower level in the case.

9. The multifunctional bread maker according to claim 8, wherein the two heating modules are an upper electrical heating tube (6) which is set horizontally at the upper level in the case and a lower electrical heating tube (7) which is set horizontally at the lower level in the case; the upper electrical heating tube (6) is set above the upper toasting pan support assembly (4) and the lower electrical heating tube (7) is set below the lower toasting pan support assembly (5).

10. The multifunctional bread maker according to claim 9, wherein, a driving device (9) for blending flour automatically is set at a bottom of the case (3) of the bread maker, and a blending bar (10) is set in the bread bucket (8); the driving device (9) is connected to the blending bar (10) via gearing and the blending bar (10) rotates to blend flour in the bread bucket(8); the upper electrical heating tube (6) is set at a middle level around the bread bucket (8); and the lower electrical heating tube (7) is set at a bottom of the bread bucket (8).

11. The multifunctional bread maker according to claim 2, 3 or 4, wherein, there is one heating module set horizontally at a middle level in the case; the heating module is a ring-shaped electrical heating tube (16) surrounding the bread bucket or the toasting pan; and the electrical heating tube (16) is set between the upper toasting pan support assembly (4) and the lower toasting pan support assembly (5).

12. The multifunctional bread maker according to claim 3 or 4, wherein the heating module comprises a hot air circulator (26) set outside the enclosed working cavity; air outlets (266) of the hot air circulator are connected to the enclosed working cavity; and the hot air circulator (26) comprises a blowing unit and a heating unit.

13. The multifunctional bread maker according to claim 12, wherein the hot air circulator (26) is set between the outer shell and the case.

14. The multifunctional bread maker according to claim 11 or 12, wherein the hot air circulator (26) comprises a heating box (261), a hot air fan (262), a hot air box (263), a motor (264) and a cooling fan(265) orderly set in a direction of outflow air; the hot air box (263) shields the hot air fan (262) from the motor (264), so that a region for hot air flow is formed in the hot air box (263).

15. The multifunctional bread maker according to claim 13, wherein heating wires are set in the heating box (261); the hot air fan (262) and the cooling fan (265) are axial fans; the hot air box (263) is a completely closed box; the hot air fan (262) for the heating box (261) is located in a region enclosed by the heating box(261); and rotation axes of the hot air fan (262) , the motor (264) and the cooling fan (265) lie on a same line.
